**Europäisches Patentamt**

**European Patent Office**

**Office européen des brevets**

(19)

(11) Veröffentlichungsnummer : **0 099 364**
**B1**

(12) **EUROPÄISCHE PATENTSCHRIFT**

(45) Veröffentlichungstag der Patentschrift :
07.09.88

(51) Int. Cl.⁴ : **G 01 N   3/42**

(21) Anmeldenummer : **83900161.7**

(22) Anmeldetag : **06.01.83**

(86) Internationale Anmeldenummer :
**PCT/CH 83/00001**

(87) Internationale Veröffentlichungsnummer :
**WO/8302666 (04.08.83 Gazette 83/18)**

(54) **EINRICHTUNG ZUR DURCHFÜHRUNG VON MIKROMECHANISCHEN MESSUNGEN AN OBERFLÄCHEN VON PRÜFOBJEKTEN.**

(30) Priorität : **25.01.82 CH 440/82**

(43) Veröffentlichungstag der Anmeldung :
**01.02.84 Patentblatt 84/05**

(45) Bekanntmachung des Hinweises auf die Patenterteilung : **07.09.88 Patentblatt 88/36**

(84) Benannte Vertragsstaaten :
**AT DE FR GB NL SE**

(56) Entgegenhaltungen :
**CH-A-   501 915**
**DE-A- 2 357 755**
**DE-A- 2 655 864**
**DE-B- 1 246 279**
**FR-A- 1 406 668**
**FR-A- 2 209 103**
**US-A- 4 245 496**
**Patent Abstracts of Japan, vol. 4, no. 86, publ. 20 June 1980, p. 568P16**

(73) Patentinhaber : **OESTERLE, Kurt Martin**
**Goldbacherstrasse 88**
**CH-8700 Küsnacht (CH)**

(72) Erfinder : **OESTERLE, Kurt Martin**
**Goldbacherstrasse 88**
**CH-8700 Küsnacht (CH)**

(74) Vertreter : **Haffter, Tobias Fred, Dr. Dipl.-Phys. et al**
**PATENTANWALTS-BUREAU ISLER AG Postfach 6940**
**Walchestrasse 23**
**CH-8023 Zürich (CH)**

**Beschreibung**

Die vorliegende Erfindung bezieht sich auf einen Messkopf zur Erzeugung von Messwerten bei mikromechanischen Messungen an Materialien gemäss dem oberbegriff des Patentanspruchs 1.

Zur Bestimmung des Verhaltens und der Materialkonstanten von metallischen und nichtmetallischen Werkstoffen auf mikromechanischem Weg besteht bekanntlich das einfachste Verfahren darin, an der Oberfläche eines Prüfkörpers die Eindringtiefe y eines belasteten Indentors, beispielsweise einer Pyramidenspitze, einer Kugel oder einer Kegelspitze, in Abhängigkeit von der veränderlichen Grösse F der Belastung des Indentors aufzunehmen und aus dem Quotienten F/y einen Kennwert für die physikalischen Eigenschaften der Oberflächenschicht des Prüfkörpers zu ermitteln.

Um die einem solchen bekannten Verfahren anhaftenden Nachteile, nämlich die Abhängigkeit des Kurvenverlaufs der über der Belastung F aufgetragenen Eindringtiefe y von der Belastungszeit, von der Form und der Oberflächenbeschaffenheit des Indentors sowie bei dünnen Beschichtungen und Lackierungen auch von der Schichtdicke, zu beseitigen, ist auch ein verbessertes Verfahren zum Bestimmen des infinitesimalen Härteverhaltens (IHV) seit 1968 bekannt. Bei diesem bekannten Verfahren wird der Quotient aus der Belastung F und der Eindringtiefe y über der Belastung F aufgetragen. Die erhaltene Kurve ist zwar auch von den genannten Parametern abhängig. Ihr Schnittpunkt mit der Ordinatenachse bildet jedoch einen Grenzwert

$$IHV = \lim F/y \, (F) \text{ für } F \to 0 \, ,$$

der sich im wesentlichen als parameterunabhängig erwiesen hat. Dieser IHV-Wert genannte Grenzwert ist ein signifikanter, eindeutiger Materialwert, der durch den Zustand und kleinste Veränderungen, welche das Material durch äussere, oft gezielte Einflüsse erfährt, in charakteristischer Weise geändert wird. Ausgedehnte Versuche und theoretische Untersuchungen haben gezeigt, dass gilt : $IHV \sim C \sqrt{E}$, wobei C eine dimensionsbehaftete, für bestimmte Stoffklassen jeweils praktisch konstante Grösse und E der Elastizitätsmodul des Prüfkörpermaterials ist.

Bei dem seit 1968 bekannten IHV-Verfahren geschieht das Registrieren der Wertepaare F, y und der Quotienten F/y, das Errechnen der Quotienten F/y sowie das Ermitteln der funktionellen Abhängigkeit der Eindringtiefe y von der Belastung F und des IHV-Wertes durch eine Hilfsperson im wesentlichen von Hand, wobei natürlich die Verwendung der bei Härtemessungen üblichen Hilfsmittel nicht ausgeschlossen ist. Die Bestimmung des einzelnen IHV-Wertes und noch mehr die Bestimmung einer Reihe von IHV-Werten dauert zu lange.

Ein Verfahren zum Bestimmen des infinitesimalen Härteverhaltens (IHV) von Materialien, das sich um ein Vielfaches schneller und auch sicherer durchführen lässt, ist aus der DE-A-2 357 755 bekannt. Bei diesem auch als IMD (Infinitesimal Module Determination) bekannten Verfahren wird die Oberfläche des Prüfkörpers durch den Belastungskörper unter sich stetig gleichsinnig ändernder Einzelbelastung kontinuierlich belastet. In zeitlichen Abständen werden die momentane Belastung F und die dabei erreichte Grösse y der Eindringtiefe ermittelt und zur digitalen Registrierung gespeichert. Die gespeicherten Wertepaare F/y, F werden zur Ermittlung der Funktion F/y = F/y (F) verarbeitet, worauf ein digitaler IHV-Wert durch die vorgenannte Limes-Bildung maschinell errechnet und ermittelt wird.

Aus der DE-A-2 655 864 ist eine Vorrichtung zum gesteuerten Aufbringen einer Kraft auf einen Festkörper mit verschiedenen Anwendungen bekannt, nämlich zum Messen der Mikrohärte von Werkstoffen, zum Messen der Dicke eines Ueberzugs auf einem Werkstoff mit gegenüber dem Ueberzug grösserer Härte und zum Messen des Adhäsionsvermögens oder der Rauhheit eines Werkstoffs. Diese Vorrichtung enthält eine geführte Messspitze, die mit dem Festkörper in Berührung bringbar ist, eine Aufbringvorrichtung mit einem elektrischen Schrittmotor, um mittels der Messspitze eine kontinuierlich veränderliche Kraft auf den Festkörper auszuüben, und eine zwischen der Messspitze und der Aufbringvorrichtung befestigte Dynamometerzelle zum kontinuierlichen Messen der genannten Kraft. Zum Messen der Mikrohärte des Werkstoffs des Festkörpers wird mittels der elektrischen Signale der Dynamometerzelle der Schrittmotor derart gesteuert, dass die durch die Messspitze auf den Festkörper ausgeübte Kraft angenähert konstant ist. Am Ende einer vorgegebenen Messzeit wird die totale, durch von einem Impulsgenerator für den Schrittmotor abgegebene Anzahl Impulse dargestellte Verschiebung der Messspitze festgehalten und in Beziehung zur konstant gehaltenen Kraft und zur Messzeit gebracht, um einen Kennwert der Mikrohärte des Werkstoffs des Festkörpers zu ermitteln.

Bei diesen bekannten mikromechanischen Messungen können nur kleine Proben in erschütterungsfrei aufgestellten, stationären Apparaturen zur Messung eingesetzt werden.

Aus der US-A-4 245 496 ist zur Messung der Materialhärte, insbesondere der Brinell-Härte, eines beliebigen Prüfobjekts ein tragbarer Messkopf bekannt. Dieser Messkopf enthält eine mittels Federanordnungen mit bestimmter Kraft verschiebbare Messspitze und eine federnd gelagerte Auflagefläche zum Aufsetzen des Messkopfs auf eine oberfläche des Prüfobjekts. Eine erste, manuell betätigbare Federanordnung übt nach dem Aufsetzen des Messkopfs auf das Prüfobjekt eine relativ geringe Kraft zur Durchdringung allenfalls vorhandener Oberflächenunregelmässigkeiten wie einer Rostschicht aus. Eine zweite, ebenfalls manuell betätigbare Federanordnung übt über die Messspitze eine wesentlich höhere Kraft auf die Oberflächenschicht des Prüfobjekts aus. Die durch diese höhere Kraft bewirkte Eindringtiefe der Messspitze wird mittels Dehnungsmessstreifen festgestellt und mittels der elektrischen Veränderung der Dehnungsmessstreifen in einer Auswerteeinrichtung registriert, um nach Ablauf einer Messzeit einen Kennwert der Härte der Oberflächenschicht des Prüfobjekts zu ermitteln.

Aufgabe der vorliegenden Erfindung ist es, mikromechanische Messungen gemäss dem genannten IHV- bzw. IMD-Verfahren mit fortschreitend verfügbaren Messwerten bezüglich Erzeugung und Bewirkung von Kraft auf die Messachse und Vorschub der Messachse auch an Grossobjekten zu ermöglichen.

Zur Lösung dieser Aufgabe weist der erfindungsgemässe Messkopf die im kennzeichnenden Teil des Patentanspruchs 1 angeführten Merkmale auf.

Mit einem solchen Messkopf wird es möglich, ohne die Notwendigkeit einer kleinflächigen Messprobe mikromechanische IHV- bzw. IMD-Messungen der aus der DE-A-2 357 755 bekannten Art auch an Grossobjekten wie Maschinen, Fahrzeugen, Fassaden und dergleichen rasch und zuverlässig durchzuführen.

Von besonderem Vorteil ist es, zum Bestimmen des infinitesimalen Härteverhaltens von Oberflächen durch Ermittlung des Grenzwertes des Quotienten F/y in Abhängigkeit von F für F → 0 einen Messkopf anzuwenden, der die im Patentanspruch 2 angeführten Merkmale aufweist. Anstatt wie üblich mit kleinen und kleinsten Belastungen des Belastungskörpers die gewünschte Genauigkeit anzustreben, kann somit bei der vorliegenden Erfindung mit endlich grossen, gut und genau erfassbaren Messgrössen die Gesetzmässigkeit des Infinitesimalisierungsprozesses und darauf fussend auch der angeführte IHV- bzw. IMD-Grenzwert als Kennwert des betreffenden Materials automatisch ermittelt werden.

Bei einer bevorzugten Ausführungsform des erfindungsgemässen Messkopfs weist dieser die im Patentanspruch 3 angeführten Merkmale auf.

Ausführungsbeispiele des Erfindungsgegenstandes werden nachstehend anhand der Zeichnungen erläutert. Es zeigen :

Fig. 1 die schematische Darstellung eines induktiven Krafterzeugers oder einer Vorschubeinrichtung zur Verwendung im Messkopf nach der Erfindung,

Fig. 2 die schematische Darstellung eines induktiven Wegaufnehmers zur Verwendung im Messkopf nach der Erfindung,

Fig. 3 die schematische Darstellung eines induktiven Kraftaufnehmers zur Verwendung im Messkopf nach der Erfindung,

Fig. 4 die schematische Darstellung eines ersten Ausführungsbeispiels eines Messkopfs zur Aufnahme der Eindringtiefe in Abhängigkeit von der Eindringkraft bei konstanter Messzeit,

Fig. 5 die schematische Darstellung eines zweiten Ausführungsbeispiels eines Messkopfs zur Aufnahme der Eindringkraft in Abhängigkeit von der Eindringtiefe bei konstanter Messzeit.

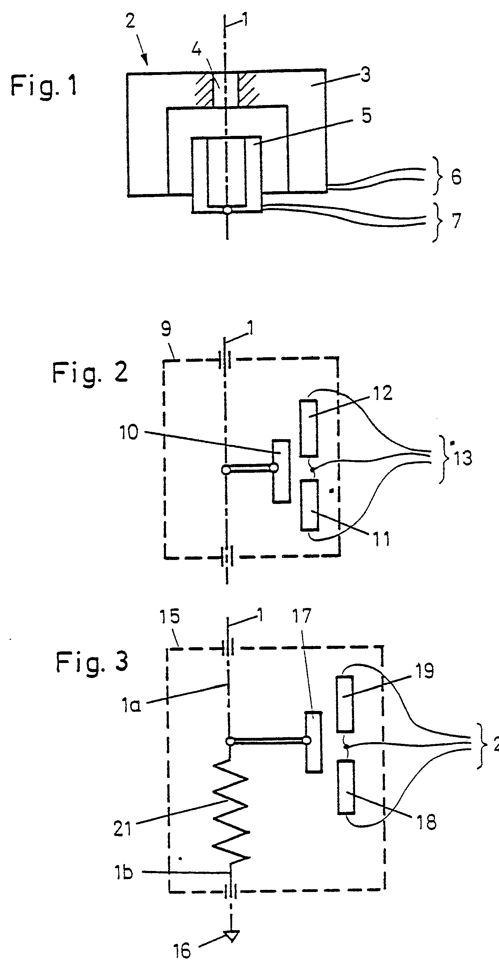

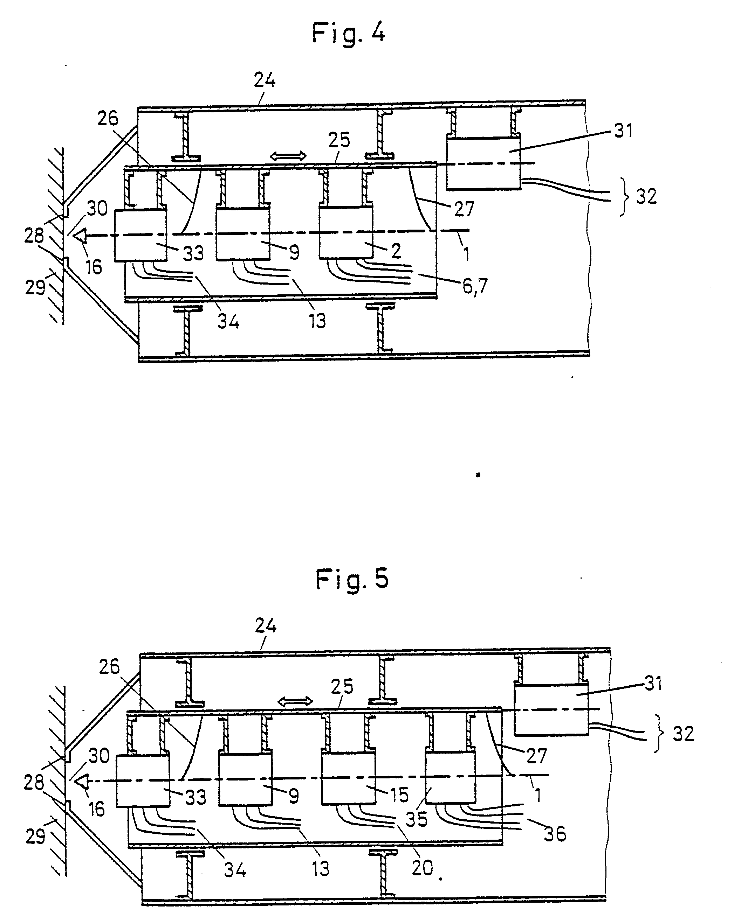

In Fig. 1 ist eine Messachse 1 des vorliegenden, anhand der Fig. 4 und 5 noch näher erläuterten Messkopfs schematisch dargestellt. Die Messachse 1 trägt an ihrem zur Einwirkung auf die Oberflächenschicht des Prüfobjekts bestimmten Ende einen nicht dargestellten Indentor. Zur Ausübung einer Längskraft auf die Messachse 1 und damit auf den Indentor weist der in Fig. 1 schematisch dargestellte induktive Krafterzeuger 2 ein Solenoid oder einen Permanentmagneten 3 in Topfform auf, das bzw. der an einem in Fig. 1 nicht dargestellten Gehäuse des Messkopfs befestigt und mit einer Oeffnung 4 für den freien Durchgang der Messachse 1 versehen ist. Im Topfinnern ist ein weiteres Solenoid 5 angeordnet, das mit der Messachse 1 fest verbunden ist. Ueber Speiseleitungen 6 wird das Solenoid 3 mit konstantem Strom versorgt, wobei diese Speiseleitungen selbstverständlich entfallen, wenn statt des Solenoids ein Permanentmagnet vorgesehen wird. Weitere Speiseleitungen 7, welche zu einem äusseren, örtlich getrennten Steuergerät führen, versorgen das zweite Solenoid 5 mit einem gesteuert veränderlichen Gleichstrom. Durch entsprechende Einstellung dieses Gleichstroms im Steuergerät kann auf die im Gehäuse des Messkopfs in ihrer Längsrichtung frei bewegliche Messachse 1 eine veränderliche Kraft ausgeübt werden. Dieser induktive Krafterzeuger kann auch als induktive Vorschubeinrichtung Verwendung finden.

In Fig. 2 ist ein induktiver Wegaufnehmer 9 schematisch dargestellt, mit welchem eine Längsverschiebung der bereits erwähnten Messachse 1, d. h. der inkrementalen Eindringtiefe des an der Messachse befestigten Indentors in die Oberflächenschicht des Prüfobjekts, aufgenommen wird. Hierzu ist mit der Messachse 1 ein Magnetkern oder Anker 10 fest verbunden. Dem Anker 10 sind zwei in Längsrichtung angeordnete Solenoide 11 und 12 zugeordnet, die bezüglich der Messachse 1 stationär angeordnet sind und Elemente einer äusseren, getrennten Messbrücke (nicht dargestellt) bilden, mit welcher sie über Leitungen 13 verbunden sind. Eine Längsverschiebung der Messachse 1 bewirkt zufolge der geänderten Lage des Ankers 10 bezüglich der Solenoide 11, 12 eine Verstimmung der Messbrücke und erzeugt damit einen elektrischen Messwert für die Verschiebung der Messachse 1 und damit des Indentors.

Anstelle der induktiven Messanordnung 9 könnte als Wegaufnehmer auch ein piezoelektrisches Element Verwendung finden.

In Fig. 3 ist ein induktiver Kraftaufnehmer 15 schematisch dargestellt, mit welchem die bei einer Längsverschiebung der Messachse 1 über den an ihr befestigten Indentor 16 auf die Oberflächenschicht des Prüfobjekts ausgeübte Kraft aufgenommen wird. Der Kraftaufnehmer 15 enthält wiederum einen mit der Messachse 1 fest verbundenen Anker 17, welchem ebenfalls zwei in Längsrichtung angeordnete Solenoide 18 und 19 einer über Leitungen 20 angeschlossenen äusseren Messbrücke zugeordnet sind. Zwischen einem Abschnitt la der Messachse 1, welcher den Anker 17 trägt, und einem Abschnitt 1b der Messachse 1, welcher den Indentor 16 trägt, ist eine Feder 21 angeordnet. Durch die von der Messachse 1 bzw. dem Messachsenabschnitt la ausgeübte Kraft wird die Feder 21 zusammengedrückt, wobei sich der Anker 17 vor den beiden Solenoiden 18, 19 der Messbrücke verschiebt. Der Grad der Verstimmung der Messbrücke ist somit ein Mass für die vom Indentor 16 auf die Oberflächenschicht des Prüfobjekts ausgeübte Kraft.

In den Fig. 4 und 5 sind Ausführungsbeispiele des Messkopfs dargestellt, die von den anhand der Fig. 1 bis 3 beschriebenen Messelementen wahlweise Gebrauch machen. Alle schematisch dargestellten Messköpfe weisen ein in der Hand haltbares, längliches Gehäuse 24 auf, in welchem ein zylindrisches Rohrteil 25 axial verschiebbar gelagert ist. In diesem Rohrteil 25 ist die Messachse 1 mittels eines astatischen Federpaares 26, 27 oder gegebenenfalls mehreren solchen Federpaaren gelagert, derart, dass sich die Messachse 1 in Längsrichtung ohne Krafteinwirkung durch die Lagerung verschieben kann. Stirnseitig ist das Gehäuse 25 mit einer durch drei Abstützfüsse gebildeten Auflagefläche 28 versehen, die erlaubt, den Messkopf auf die Oberfläche des zu prüfenden Objekts 29 aufzusetzen und gegen diese zu drücken. Zwischen den Abstützfüssen der Auflagefläche 28 ist eine Oeffnung 30 vorhanden, durch welche der am Ende der Messachse 1 befestigte Indentor 16 treten kann, um auf die Oberflächenschicht des Prüfobjekts 29 einzuwirken. Bei allen dargestellten Ausführungsbeispielen ist das Rohrteil 25 am vom Indentor 16 abgewandten Endbereich mit einem am Gehäuse 24 befestigten Schrittmotor 31 wirkverbunden, dem über Leitungen 32 Steuerimpulse von einer äusseren, getrennten Steuereinrichtung zuführbar sind und der einen Vorschub bzw. eine Rückführung des Rohrteils 25 und damit der Messachse 1 bewirkt. Ferner weist jeder der Messköpfe der Fig. 4 und 5 einen am indentorseitigen Ende am Rohrteil 25 befestigten induktiven Nullanzeiger 33 auf, der entsprechend dem induktiven Wegaufnehmer 9 der Fig. 2 ausgebildet sein kann und entsprechende elektrische Verbindungsleitungen 34 hat. Der Nullanzeiger 33 dient jeweils dazu, mittels eines elektrischen Signals anzuzeigen, wann sich die Spitze des Indentors 16 mindestens angenähert in der Ebene der Auflagefläche 28 befindet bzw. die Oberfläche des Prüfobjekts bei aufgesetztem Messkopf berührt.

Die in den Fig. 4 und 5 dargestellten elektrischen Verbindungsleitungen sind gesamthaft, z. B. in Form eines vieladrigen Kabels, zu einer getrennten zentralen und stationären Steuer- und Auswerteeinrichtung geführt, deren Ausbildung nicht Gegenstand der vorliegenden Erfindung ist.

Beim Ausführungsbeispiel der Fig. 4 sind in Wirkverbindung mit der Messachse 1 und im Rohrteil 25 gelagert ein induktiver Krafterzeuger 2, beispielsweise gemäss Fig. 1, und ein induktiver Wegaufnehmer 9, beispielsweise gemäss Fig. 2, angeordnet. Der Schrittmotor 31 bewirkt nach Aufsetzen des Messkopfs auf das Prüfobjekt 29 über das Rohrteil 25 einen Grob-Vorschub der Messachse 1 bis zum Ansprechen des Nullanzeigers 33, wenn sich die Spitze des Indentors 16 mindestens angenähert in der Ebene der Auflagefläche 28 des Gehäuses 24 befindet bzw. die Oberfläche des prüfobjekts 29 berührt, worauf der Schrittmotor 31 ausgeschaltet wird.

In diesem Zustand wird der induktive Krafterzeuger 2 eingeschaltet, der nun unter Angabe der Grösse F der jeweiligen Kraft die Messachse 1 inkremental verschiebt und das Eindringen des Indentors 16 in die Oberflächenschicht des Prüfobjekts 29 bewirkt. Die entsprechende jeweilige Eindring-Tiefe y wird vom induktiven Wegaufnehmer 9 gestellt und als elektrisches Signal an die Leitungen 13 abgegeben.

Nach Erreichen einer bestimmten Eindringtiefe y wird der Krafterzeuger 2 ausgeschaltet und der Schrittmotor 31 zur Rückführung der Messachse 1 in ihre Ausgangslage umgeschaltet. Die Erstellung der Kurve y = f (F) für konstante Zeitintervalle und die Ermittlung des IHV- bzw. IMD-Wertes erfolgt wiederum in der zentralen Steuer- und Auswerteeinrichtung.

Beim Ausführungsbeispiel der Fig. 5 ist in Wirkverbindung mit der Messachse 1 eine im Rohrteil 25 gelagerte Vorschubeinrichtung 35 mit Verbindungsleitungen 36 angeordnet, wobei die Vorschubeinrichtung 35 ein weiterer Schrittmotor sein kann oder als induktive Vorschubeinrichtung entsprechend dem Krafterzeuger 2 der Fig. 1 ausgebildet sein kann. Ferner ist in Wirkverbindung mit der Messachse 1 ein im Rohrteil 1 gelagerter induktiver Kraftaufnehmer 15 angeordnet, wie er beispielsweise anhand der Fig. 3 beschrieben wurde. Da zwischen dem von der Vorschubeinrichtung 35 beeinflussten Abschnitt der Messachse 1, der in Fig. 3 mit la bezeichnet ist, und dem den Indentor 16 tragenden Abschnitt der Messachse 1, der in Fig. 3 mit 1b bezeichnet ist, die Feder 21 der Fig. 3 angeordnet ist, steht zur Erfassung der Eindringtiefe mit der Messachse 1 ein Wegaufnehmer 9 in Wirkverbindung, der beispielsweise gemäss Fig. 2 ausgebildet ist und der im Rohrteil 25 gelagert ist.

Mit dem dargestellten Messkopf wird zusammen mit der vorerwähnten zentralen Steuer- und Auswerteeinrichtung der nachstehende Messvorgang durchgeführt : Der Messkopf wird mit seiner Auflagefläche 28 auf das Prüfobjekt 29 aufgesetzt. Hierauf wird der Schrittmotor 31 eingeschaltet. Der Schrittmotor 31 schiebt dadurch die Messachse 1 mit dem Indentor 16 über das Rohrteil 25 relativ rasch vor, bis der Nullanzeiger 33 durch ein entsprechendes Signal anzeigt, dass die Spitze des Indentors 16 mindestens angenähert die Ebene der Auflagefläche 28 erreicht hat bzw. die Oberfläche des Prüfobjekts 29 berührt (Null- oder Referenzlage der Messachse 1).

In diesem Zeitpunkt wird der Schrittmotor 31 ausgeschaltet und die Vorschubeinrichtung 35 eingeschaltet, um die Messachse 1 in inkrementalen Schritten vorzuschieben. Der induktive Kraftaufnehmer 15 nimmt die Eindringkraft F in Abhängigkeit von der durch die Vorschubeinrichtung 35 bewirkten und vom Wegaufnehmer 9 gemessenen Eindringtiefe y auf und gibt kontinuierlich bzw. inkremental entsprechende Signale über die Leitungen 20 ab, welche in der zentralen Steuer- und Auswerteeinrichtung entsprechend der Kurve y = f (F) für konstante Zeitintervalle verarbeitet werden.

Nach Erreichen einer vorgegebenen Eindringtiefe y wird der Schrittmotor 31 erst ausgeschaltet und dann zwecks einer Rückführung der Messachse 1 in ihre Ausgangslage im entgegengesetzten Sinn eingeschaltet. Die Verarbeitung der vom Messkopf an die zentrale Steuer- und Auswerteeinrichtung abgegebenen Signale erfolgt einschliesslich Speicherung in dieser Einrichtung, beispielsweise in der aus der DE-A-2 357 755 bekannten Weise zur Ermittlung des bereits erwähnten IHV- bzw. IMD-Wertes.

Bei Messungen mit den beschriebenen Messköpfen liegen die praktisch vorkommenden Belastungen F des Indentors 16 je nach Material des Prüfobjekts im Bereich einiger 10 mN bis zu einigen N, während die Eindringtiefen y im Bereich von etwa 0,2 bis 100μm liegen.

Die dargestellte Anordnung des im Gehäuse 24 axial verschiebbar gelagerten und durch den Schrittmotor 31 bewegbaren Rohrteils 25, in welchem die Messachse 1 und alle Einrichtungen zur Erzeugung und Aufnahme von Kraft und Vorschub der Messachse gelagert sind, bewirkt, dass der grobe Vorschub dieser Messelemente und der Messachse keinen Beitrag zu den Messresultaten liefert, d. h. dass die von den Messelementen gelieferten Messwerte die zur Erzielung einer Referenzlage der Messachse vorgesehene Grobverschiebung nicht enthalten. Zudem kann durch die Anordnung des Rohrteils 25 mit dem Schrittmotor 31 eine Kompensation der Erdbeschleunigung erreicht werden. Obwohl der beschriebene Messkopf während des ganzen Messvorgangs von Hand auf die Oberfläche des Prüfobjekts abgestützt wird, treten im praktischen Gebrauch keine das Messergebnis fälschende Abweichungen auf, und zwar weil die Dreipunktauflage des Messkopfs auf der Oberfläche des Prüfobjekts eine undefinierte Auflage ausschliesst, ferner weil der Messvorgang relativ kurz ist, nämlich etwa 10 bis 60 Sekunden, und schliesslich weil etwaige Abweichungen der einzelnen Messwerte durch die elektronische Auswertung, insbesondere die Grenzwertbildung, ausgemittelt werden. Falls erwünscht, kann das Gehäuse 24 des Messkopfs mit Mitteln versehen werden, welche den auf die Oberfläche des Prüfobjekts aufgesetzten Messkopf mindestens teilweise und mindestens in dessen senkrechter oder angenähert senkrechter Lage wegnehmbar festhalten, z. B. eine elastische Saugglocke, eine Haftschicht oder dergleichen.

## Patentansprüche

1. Messkopf zur Erzeugung von Messwerten bei mikromechanischen Messungen an Materialien, bei welchen Messungen die zu prüfende oberflächenschicht eines Prüfobjekts (29) durch einen Belastungskörper (1, 16) gleichsinnig veränderlich belastet wird, jeweils die Belastung F des Belastungskörpers (1, 16) sowie die Eindringtiefe y des Belastungskörpers (1, 16) in das Prüfobjekt (29) festgehalten werden und aus Wertepaaren F, y jeweils der Quotient F/y berechnet wird, um einen Kennwert für die oberflächenschicht des Prüfobjekts (29) zu ermitteln, mit einer als Belastungskörper verschiebbar gelagerten Messachse (1), die an ihrem einen Ende mit einem Indentor (16) versehen ist, und mit elektrisch steuerbaren Mitteln (2 ; 35) zur Einwirkung auf die Messachse (1) in deren Längsrichtung sowie mit Mitteln (9 ; 15) zur Erzeugung von Messignalen, welche von der Grösse der Einwirkung des am Ende der Messachse (1) befindlichen Indentors (16) auf die Oberflächenschicht des Prüfobjekts (29) abhängen, wobei die genannten Mittel (2, 9, 15, 35) mit elektrischen Verbindungsleitungen (6, 7, 13, 20) zur Verbindung des Messkopfs mit einer von ihm getrennten elektronischen Steuer- und Auswerteeinrichtung versehen sind, dadurch gekennzeichnet, dass der Messkopf ein mittels einer Auflagefläche (28) auf das Prüfobjekt (29) aufsetzbares Gehäuse (24) aufweist, wobei eine der Auflagefläche (28) benachbarte Oeffnung (30) des Gehäuses (24) den Austritt des Indentors (16) über die Auflagefläche (28) hinaus ermöglicht, und dass im Gehäuse (24) in Wirkverbindung mit der Messachse (1) entweder eine elektrisch betätigbare Vorschubeinrichtung (35), die zur Erzeugung inkrementaler Verschiebungen der Messachse (1) in deren Längsrichtung ausgebildet ist, und ein Kraftaufnehmer (15) angeordnet sind, der zur kontinuierlichen Abgabe von elektrischen, die auf die Messachse (1) ausgeübte jeweilige Kraft darstellenden Messignalen ausgebildet ist, oder aber ein elektrisch betätigbarer Krafterzeuger (2), der zur Ausübung von inkremental veränderlichen Kräften auf die Messachse (1) in deren Längsachse ausgebildet ist, und ein Wegaufnehmer (9) angeordnet sind, der zur kontinuierlichen Abgabe von elektrischen, die Längsverschiebung der Messachse (1) darstellenden Messignalen ausgebildet ist.

2. Messkopf nach Anspruch 1, dadurch gekennzeichnet, dass im Gehäuse (24) ein mit der Messachse (1) in Wirkverbindung stehender Schrittmotor (31) und ein induktiver Nullanzeiger (33) angeordnet sind, welch letzterer einen mit der Messachse (1) fest verbundenen Magnetanker (10) und eine dem Magnetanker (10) zugeordnete Solenoidanordnung (11, 12) umfasst, um ein einer Referenzlage entsprechendes Steuersignal für den Schrittmotor (31) zu erzeugen, in welcher Referenzlage die Spitze des Indentors (16) mindestens angenähert in der Ebene der Auflagefläche (28) liegt.

3. Messkopf nach Anspruch 2, dadurch gekennzeichnet, dass im Gehäuse (24) ein in Längsrichtung verschiebbares Rohrteil (25) gelagert ist, welches zu seinem Vorschub mit dem Schrittmotor (31) in Verbindung steht, wobei die Messachse (1), die Vorschubeinrichtung (35) und der Kraftaufnehmer (15) bzw. der Krafterzeuger (2) und der Wegaufnehmer (9) sowie der Nullanzeiger (33) im Innern des Rohrteils (33) angeordnet und mit diesem verbunden sind.

4. Messkopf nach einem der Ansprüche 1 bis 3, dadurch gekennzeichnet, dass der Krafterzeuger (2) oder die Vorschubeinrichtung (35) eine zweiteilige induktive Anordnung (3, 5) umfasst, von welchen induktiven Teilen das eine (5) mit der Messachse (1) fest verbunden und das andere (3) gehäusefest bzw. mit dem Rohrteil (25) fest verbunden ist, und von welchen induktiven Teilen mindestens eines (5) ein Solenoid ist.

5. Messkopf nach einem der Ansprüche 1 bis 3, gekennzeichnet durch einen induktiven Wegaufnehmer (9), beispielsqweise einen mit der Messachse (1) fest verbundenen Magnetanker (10), und eine dem Magnetanker (10) zugeordnete Solenoidanordnung (11, 12), welche gehäusefest bzw. mit dem Rohrteil (25) fest verbunden ist.

6. Messkopf nach einem der Ansprüche 1 bis 3, gekennzeichnet durch einen induktiven Kraftaufnehmer (15), beispielsweise einen mit der Messachse (1) fest verbundenen Magnetanker (17), eine zwischen dem Magnetanker (17) und dem Indentor (16) angeordnete Druckfeder (21) und eine dem Magnetanker (17) zugeordnete Solenoidanordnung (18, 19), welche gehäusefest ist bzw. mit dem Rohrteil (25) fest verbunden ist. ▪

**Claims**

1. A measuring head for producing measured values in micromechanical measurements on materials, in which measurements the surface layer of a test object (29) under test is subjected to varying loading in the same direction by a loading member (1, 16), its loading F and its depth of penetration y into the test object (29) each being recorded and the quotient F/y being calculated for each pair of values F, y in order to determine a characteristic value for the surface layer of the test object (29), comprising a loading member in the form of a measuring spindle (1) mounted for displacement and having an indentor (16) at one end, and comprising electrically controllable means (2 ; 35) to act on the measuring spindle (1) in the longitudinal direction thereof, and comprising means (9 ; 15) for generating measurement signals dependent upon the magnitude of action of the indentor (16) at the end of the measuring spindle (1) on the surface layer of the test object (29), said means (2, 9, 15, 35) being provided with electrical connecting leads (6, 7, 13, 20) for connecting the measuring head to an electronic control and evaluating unit separate therefrom, characterised in that the measuring head comprises a housing (24) adapted to be placed on the test object (29) by means of a contact surface (28), an aperture (30) in the housing (24) adjacent the contact surface (28) allowing the indentor (16) to emerge beyond the contact surface (28), and there are disposed in the housing (24) and operatively connected to the measuring spindle (1) either an electrically actuatable feed device (35) serving to produce incremental displacements of the measuring spindle (1) in its longitudinal direction, and a force sensor (15) adapted to the continuous delivery of measurement signals representing the force applied at any time to the measuring spindle (1), or an electrically actuatable force producing means (2) adapted to apply incrementally varying forces to the measuring spindle (1) along its longitudinal axis, and a travel sensor (9) adapted to the continuous delivery of electrical measurement signals representing the longitudinal displacement of the measuring spindle (1).

2. A measuring head according to claim 1, characterised in that the housing (24) contains a stepping motor (31) operatively connected to the measuring spindle (1) and an inductive zero indicator (33), which latter comprises a magnet armature (10) fixed to the measuring spindle and a solenoid arrangement (11, 12) associated with the magnet armature (10) to produce a control signal for the stepping motor (31) corresponding to a reference position in which the point of the indentor (16) lies at least approximately in the plane of the contact surface (28).

3. A measuring head according to claim 2, characterised in that the housing (24) contains a tubular member (25) which is displaceable in the longitudinal direction and which, for its feed, is connected to the stepping motor (31), the measuring spindle (1), the feed device (35) and the force sensor (15) or the force producing means (2) and the travel sensor (9) and the zero indicator (33) being disposed inside and being connected to said tubular member.

4. A measuring head according to one of claims 1 to 3, characterised in that the force producing means (2) or the feed device (35) comprises a two-part inductive arrangement (3, 5), one (5) of said inductive parts being fixed to the measuring spindle (1) and the other being fixed to the housing or to the tubular member (25), and at least one (5) of said inductive parts being a solenoid.

5. A measuring head according to one of claims 1 to 3, characterised by an inductive travel sensor (9), e. g. a magnet armature (10) fixed to the measuring spindle (1), and a solenoid arrangement (11, 12) associated with the magnet armature (10) and fixed to the housing or to the tubular member (25).

6. A measuring head according to one of claims 1 to 3, characterised by an inductive force sensor (15), e. g. a magnet armature (17) fixed to the measuring spindle (1), a compression spring (21) disposed between the magnet armature (17) and the indentor (16) and a solenoid arrangement (18, 19) associated with the magnet armature (17) and fixed to the housing or to the tubular member (25).

## Revendications

1. Tête de mesure pour obtenir sur des matériaux, des valeurs de mesures micromécaniques au cours desquelles la couche superficielle d'un objet (29) à essayer est soumise à une charge, variable dans le même sens et exercée par un corps (1, 16) de charge, l'effort de charge F exercé par le corps (1, 16) ainsi que la profondeur y de pénétration du corps (1, 16) de charge dans l'objet (29) à essayer étant maintenus constants et, à partir des paires de valeurs F, y, le quotient F/y étant à chaque fois calculé afin de déterminer une valeur caractéristique de la couche superficielle de l'objet (29) à essayer, la tête comportant un axe (1) de mesure, monté coulissant pour jouer le rôle d'un corps de charge et qui est muni à une extrémité d'un pénétrateur (16) et comporte des organes (2, 35), à commande électrique, pour agir sur l'axe (1) de mesure dans le sens longitudinal de cet axe, ainsi que des organes (9, 15) pour produire des signaux de mesure dépendant de la grandeur de l'effet du pénétrateur (16), se trouvant à l'extrémité de l'axe (1) de mesure, sur la couche superficielle de l'objet (29) à essayer, les organes (2, 9, 15, 35) cités étant équipés de conducteurs électriques (6, 7, 13, 20) destinés à relier la tête de mesure à un dispositif électronique de commande et d'évaluation, qui est séparé de cette tête de mesure, tête caractérisée en ce qu'elle présente un boîtier (24) pouvant être appliqué à l'aide d'une surface (28) d'appui sur l'objet (29) à essayer, une ouverture (30) du boîtier (24), voisine de la surface (28) d'appui, permettant la sortie du pénétrateur (16) au-delà de la surface (28) d'appui, et le boîtier (24) comportant, en liaison active avec l'axe (1) de mesure, un dispositif (35) d'avance à commande électrique, réalisé pour produire des déplacements incrémentiels de l'axe (1) de mesure, dans le sens longitudinal de celui-ci, ainsi qu'un capteur (15) d'efforts, réalisé pour émettre en continu des signaux électriques de mesure représentant à chaque fois la force exercée sur l'axe (1) de mesure, ou bien un générateur (2) d'efforts, à commande électrique, réalisé de façon à exercer sur la direction longitudinale de l'axe (1) de mesure des efforts variant de manière incrémentielle, et un capteur (9) de déplacement, réalisé pour émettre en continu des signaux électriques de mesure représentant le déplacement longitudinal de l'axe (1) de mesure.

2. Tête de mesure selon la revendication 1, caractérisée en ce que le boîtier (24) contient un moteur (31) pas à pas, en liaison active avec l'axe (1) de mesure, et un organe inductif (33) d'affichage de zéro, cet organe comportant une armature (10) d'aimant fixée à l'axe (1) de mesure et un agencement (11, 12) de solénoïdes associé à l'armature (10) d'aimant pour produire un signal de commande du moteur (31) pas à pas, signal correspondant à une position de référence dans laquelle la pointe du pénétrateur (16) se situe au moins approximativement dans le plan de la surface (28) d'appui.

3. Tête de mesure selon la revendication 2, caractérisée en ce qu'un élément tubulaire (25), pouvant coulisser dans le sens longitudinal, est monté dans le boîtier (24) et est en liaison, pour son avance, avec le moteur (31) pas à pas ; l'axe (1) de mesure, le dispositif (35) d'avance et le capteur (15) d'efforts ou bien le générateur (2) d'efforts et le capteur (9) de déplacement ainsi que l'organe (33) d'affichage de zéro étant disposés à l'intérieur de la partie tubulaire (25) et lui étant reliés.

4. Tête de mesure selon l'une des revendications 1 à 3, caractérisée en ce que le générateur (2) d'efforts ou le dispositif (35) d'avance comporte un agencement inductif (3, 5) en deux parties, l'une (5) de ces parties inductives étant fixée à l'axe (1) de mesure et l'autre (3) partie inductive étant fixée au boîtier ou à l'élément tubulaire (25), et au moins une (5) de ces parties inductives étant un solénoïde.

5. Tête de mesure selon l'une des revendications 1 à 3, caractérisée en ce qu'elle comporte un capteur (9) inductif de déplacement, par exemple une armature (10) d'aimant fixée à l'axe (1) de mesure, et un agencement (11, 12) de solénoïdes associé à l'armature (10) d'aimant et qui est fixé au boîtier ou à l'élément tubulaire (25).

6. Tête de mesure selon l'une des revendications 1 à 3, caractérisée en ce qu'elle comporte un capteur (15) inductif d'efforts, par exemple une armature (17) fixée à l'axe (1) de mesure, un ressort (21) de compression disposé entre l'armature (17) d'aimant et le pénétrateur (16) et un agencement (18, 19) de solénoïdes, associé à l'armature (17) d'aimant, cet agencement étant fixé au boîtier ou à l'élément tubulaire (25).

Fig. 1

Fig. 2

Fig. 3

## Fig. 4

## Fig. 5